# EUROPEAN PATENT APPLICATION

(11) **EP 1 732 003 A2**
(43) Date of publication of application: **13.12.2006**
(21) Application number: 06252844.3
(22) Date of filing: 01.06.2006
(51) Int. Cl.: G06F 9/46, G06F 17/30

(54) **System and method for implementing database application while guaranteeing independence of software modules**

(30) Priority: 07.06.2005 KR 20050048470
(71) Applicant: Samsung Electronics Co., Ltd., Suwon-si, Gyeonggi-Do (KR)
(72) Inventor: Kim, Gyu-baek, 208-303, Yongin-si Gyeonggi-do (KR)
(74) Representative: Brandon, Paul Laurence

(57) **Abstract**

Provided are a system and method for implementing a database application while guaranteeing the independence of software modules. The system includes an XML processing unit (252), an SQL information unit (260), an object pool (230), and a scheduler (240). The system can ensure the independence of software modules and the flexibility of developing a database application, reduce the development and maintenance cost of software programs, and guarantee the independence of software programs.

## Description

The present invention relates to methods and apparatus for developing software programs.

As an increasing number of large software programs with network functions have been developed, the importance of databases as part of such software programs has steadily grown. Also, more public attention has been drawn to a method in which data stored in databases is processed by software programs, the types of software modules that are needed to process data stored in databases, and a method to guarantee the independence of the software modules while enhancing the efficiency of databases. In general, it takes a considerable amount of time, not only to develop software programs, but also to update such software programs.

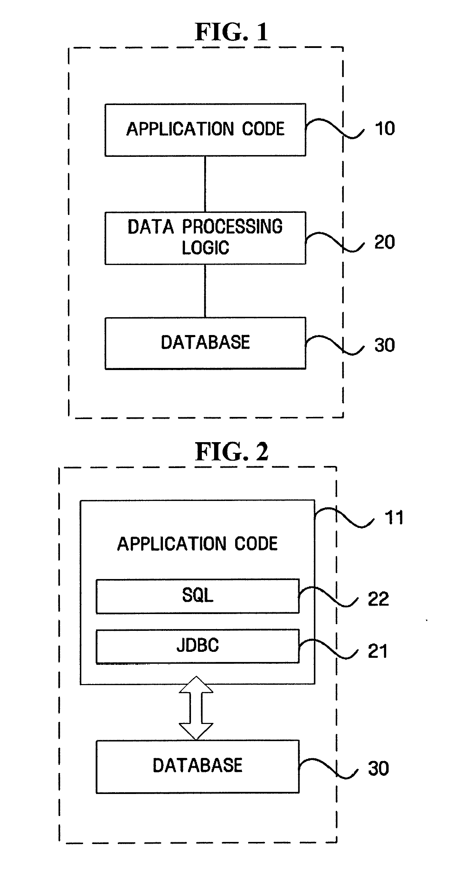

FIG. 1 is a block diagram for explaining the format of a conventional database-related software program comprising modules for processing data. Referring to FIG. 1, a software program for processing data comprises an application code 10, a data processing logic 20, and a database 30. The application code 10 receives data from a user or an external source other than the user and displays the received data. The data processing logic 20 is a routine for processing various operations performed by an application, for example, the searching of the database 30, the modification of data stored in the database 30, and the inputting of data to the database 30, and the data processing logic 20 comprises structured query language (SQL) statements. The database 30 is a module for storing and managing data. The time taken to search the database 30 for desired data and the method by which the database 30 stores data may vary according to the type of the database 30. Generally, the software program may be changed for the following three reasons. First, the software program may be changed when the application code 10 adds a field, and particularly, a log record field, to a protocol message. The application code 10 cooperates with a user or an external software program and is thus subject to change due to various external factors. Second, the software program may be changed when the schema of the database 30 is changed, for example, when a table constituting the database 30 is changed or when the names of columns of a table are changed. Third, the software program may be changed when the data processing logic 20 is changed due to changes made to the application code 10 or changes made to the database 30 (for example, when fields of the database 30 are changed) or when the data processing logic 20 is tuned for enhancing the speed of processing SQL statements. However, the application code 10, the data processing logic 20, and the database 30 are closely interrelated, and thus, changes in one of the application code 10, the data processing logic 20, and the database 30 may affect the others.

FIGS. 2 through 4 illustrate examples of a conventional system or solution for processing data. Specifically, FIGS. 2 through 4 are block diagrams for explaining conventional methods of processing data. FIG. 2 is a block diagram for explaining the format of a conventional database-related software program in which an SQL statement is hard-coded into an application code that includes a Java database connectivity (JDBC) and uses the JDBC for processing data. Referring to FIG. 2, an application code 11 uses a Java database connectivity (JDBC) 21 for processing data, and an SQL statement 22 is hard-coded into the application code 11. The format of FIG. 2 is widely used for developing database processing codes exclusively used for specific solutions and cannot guarantee the independence of a data processing program. Therefore, when the database 30 is changed, the SQL statement 22 inside the application code 11 must be changed accordingly. In the format of FIG. 2, database processing codes which call the JDBC 21 are dependent on a predetermined application, thus offering some performance advantages.

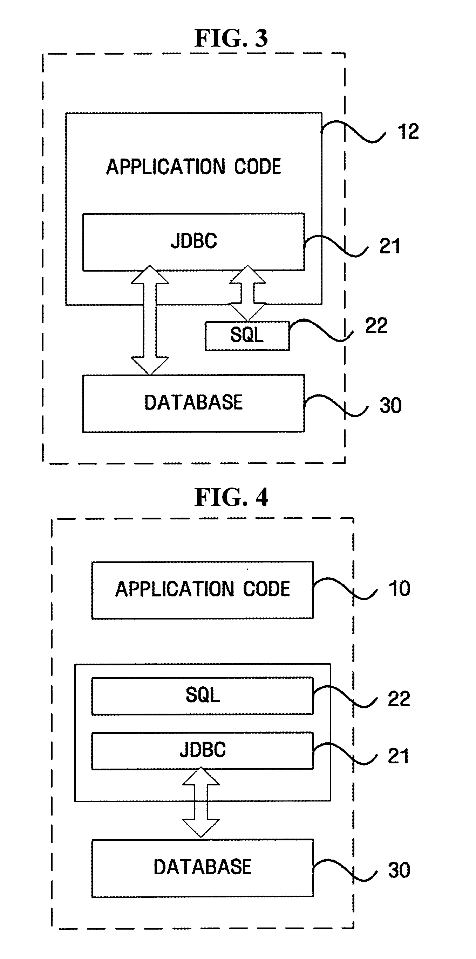

FIG. 3 is a block diagram for explaining the format of a conventional database-related software program in which an SQL statement is separated from application code that includes a JDBC and uses the JDBC for processing data.

The format of FIG. 3 is generally used in commercial middleware solutions. Referring to FIG. 3, an SQL statement 21 is implemented independently of an application code 12. Therefore, when a database 30 is changed, the application code 12 still needs to be changed accordingly.

FIG. 4 is a block diagram for explaining the format of a conventional database-related software program in which a data processing code is separated from an application code. Referring to the format of FIG. 4, a JDBC 21 and an SQL statement 22 are hard-coded into data processing code. The format of the FIG. 4 is generally used in the Spring Framework, which is a type of open source framework, products manufactured by TIBCO Software Inc., a commercial data processing software development kit (SDK), such as a fusion framework, and data access object (DAO) modules of a commercial web application server (WAS), such as WebLogic or JRun. An application 10 transmits only input parameters to a data processing logic, and the data processing logic inputs an SQL statement 22 to a database, receives a result of executing the SQL statement 22 from the database, and transmits the execution result to the application 10 as a Java Collection object instead of an SQLResultSet. This format illustrated in FIG. 4 can guarantee to some extent the independence of all software modules except for the SQL statement 22.

Table 1 is for comparing the performances of the formats illustrated in FIGS. 2 through 4 in terms of guaranteeing the independence of software modules from one another.

**Table 1**

| | Changes in Application | Changes in Database | Changes in Data processing logic |
|---|---|---|---|
| Software Modules in Format of FIG. 2 | Dependent | Dependent | Dependent |
| Software Modules in Format of FIG. 3 | Dependent | Dependent | Independent |
| Software Modules in Format of FIG. 4 | Independent | Independent | Dependent |

When software modules are not independent from one another, changes in one of the software modules affect the other software modules, thus increasing the development and maintenance cost of corresponding software programs. However, if software modules are implemented to be independent from one another, the performance of a system including the software modules may deteriorate. Therefore, it is necessary to develop a system that guarantees the independence of software modules from one another and prevents the performance of the system from deteriorating.

Preferred embodiments of the present invention aim to provide a system and method for developing software programs that are executed in conjunction with a database while guaranteeing the independence of software modules of the programs.

Preferred embodiment of the present invention also provides a system and method for reducing context switching when executing an application in conjunction with an object connected to the application.

According to an aspect of the present invention, there is provided a system for implementing a database application while guaranteeing the independence of software modules including an (Extensible Markup Language) XML processing unit which analyzes elements of an XML file and extracts SQL statements and identification information of the SQL statements, an SQL information unit which loads the SQL statements and the identification information of the SQL statements in a memory device, an object pool which comprises one or more processing objects that receive SQL statement identification information from an application, searches for an SQL statement corresponding to the received SQL statement identification information, transmits the discovered SQL statement, receives a result of executing the discovered SQL statement from a database, and transmits the execution result to the application, and a scheduler which receives first SQL statement identification information from the application, chooses from the object pool a processing object that previously received second SQL statement identification information from the application, and transmits the first SQL statement identification information to the chosen processing object.

According to another aspect of the present invention, there is provided a method of implementing a database application while guaranteeing the independence of software modules, including analyzing elements of an XML file and extracting SQL statements and identification information of the SQL statements, loading the SQL statements and the identification information of the SQL statements in a memory device, receiving first SQL statement identification information from an application, choosing a processing object that previously received second SQL statement identification information from the application, and transmitting the first SQL statement identification information to the chosen processing object, and enabling the chosen processing object to search for an SQL statement corresponding to the first SQL statement identification information, to transmit the discovered SQL statement to a database, to receive a result of executing the discovered SQL statement from the database, and to transmit the execution result to the application.

The present invention will become more apparent by describing in detail exemplary embodiments thereof with reference to the attached drawings in which:

FIG. 1 is a block diagram for explaining the format of a conventional database-related software program comprising modules for processing data;

FIG. 2 is a block diagram for explaining the format of a conventional database-related software program in which an SQL statement is hard-coded into an application code that includes a JDBC and uses the JDBC for processing data;

FIG. 3 is a block diagram for explaining the format of a conventional database-related software program in which an SQL statement is separated from application code that includes a JDBC and uses the JDBC for processing data;

FIG. 4 is a block diagram for explaining the format of a conventional database-related software program in which a data processing code is separated from an application code;

FIG. 5 is a block diagram of a data processing system according to an exemplary embodiment of the present invention;

FIG. 6 is a block diagram for explaining interactions among a plurality of modules of a data processing system according to an exemplary embodiment of the present invention;

FIG. 7 is a block diagram for explaining the operation of a scheduler according to an exemplary embodiment of the present invention, i.e., the selection of a processing object and the processing of a request for performing a database operation issued by an application;

FIG. 8 is a flowchart for explaining a method of issuing a request for a database operation using an SQL statement and identification information of the SQL statement included in an XML file according to an exemplary embodiment of the present invention;

FIG. 9 is a diagram for comparing the performance of the present invention with the performance of the prior art; and

FIG. 10 is a diagram for comparing the performance of the present invention with the performance of the prior art.

Features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention is described hereinafter with reference to flowchart illustrations of methods according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks.

These computer program instructions may also be stored in a computer usable or computer-readable memory (computer-readable medium) that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In the exemplary embodiments of the present invention described below, a "unit", a "part" or a "module" indicates a software component or a hardware component such as a field-programmable gate array (FPGA) or an application-specific integrated circuit (ASIC). The unit performs a particular function but is not restricted to software and hardware. The unit may be included in an addressable storage medium or may be configured to play (or be executed via) one or more processors. Accordingly, units may include components such as software components, object-oriented software components, class components, and task components, processes, functions, attributes, procedures, subroutines, segments of a program code, drivers, firmware, microcodes, circuits, data, databases, data structures, tables, arrays, and parameters. Components and features provided by units may be combined into a smaller number of components and a smaller number of units, or may be divided into a greater number of components and a greater number of units. In addition, components and units may be implemented such that they play (or are executed via) one or more central processing units (CPUs) in a device or a secure Multimedia Card(MMC).

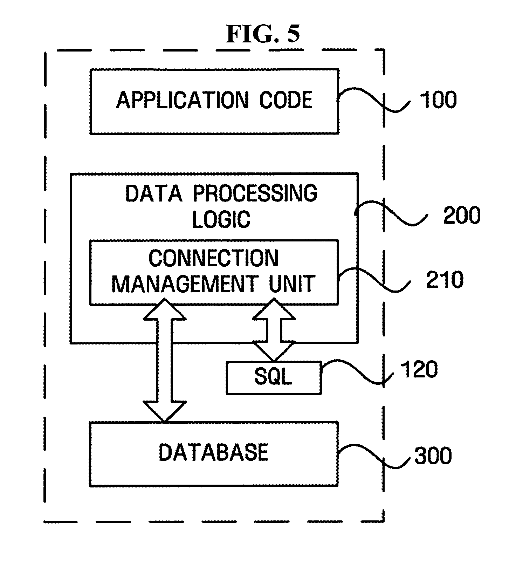

FIG. 5 is a block diagram for explaining the structure of a data processing system according to an exemplary embodiment of the present invention.

The data processing system performs a database operation requested by an application code 100.

Since the data processing system is configured to have a separate data processing logic for SQL and to manage an SQL statement outside the data processing system, the independence of each application module, database schema, and SQL can be maintained.

As shown in FIG. 5, the data processing system includes a data processing code 200 and manages an SQL statement 120 outside the data processing code 200 so that the SQL statement 120 can be independent from changes made to the application code 100, a database 130, and the data processing code 200. The data processing system also includes database 300, which is separated from the application code 100 and the data processing code 200. The data processing system manages the SQL statement 120 outside the data processing code 200.

The data processing code 200, which is used for handling the database 300, is separated from the application code 100 and is thus independent from the application code 100. The data processing code 200 and the database 300 are also separated from each other. The data processing code 200 can operate in conjunction with the database 300 with the aid of the SQL statement 120 and a connection management unit 210, and thus can be maintained independent from the database 300.

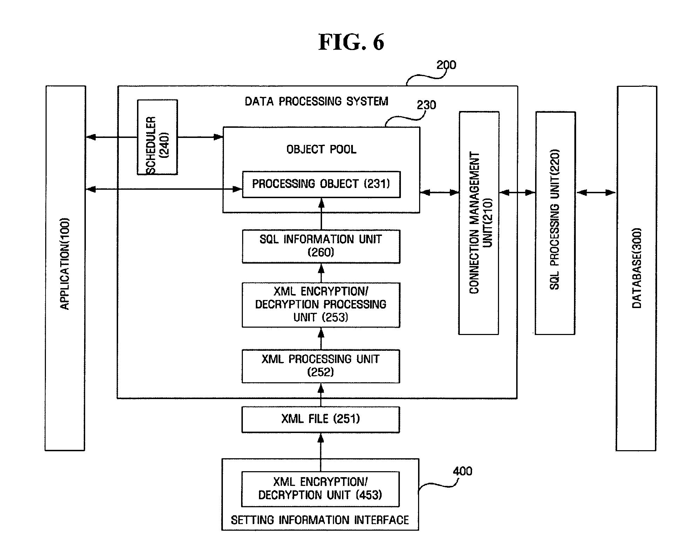

FIG. 6 is a block diagram for explaining interactions among a plurality of modules of a data processing system according to an exemplary embodiment of the present invention. A configuration graphical interface 400 (which sets an information interface) provides a user interface so that an SQL statement and settings related to the SQL statement can be stored as an XML file. The configuration graphical interface 400 can be implemented using Java Swing or C++. An administrator can input data to the data processing system and set parameters in the data processing system using the configuration graphical interface 400. Particularly, the administrator can set various monitoring-related parameters, such as parameters used for determining whether to output statistical data for the data processing system, determining the interval of outputting the statistical data, and outputting console messages, in the data processing system using the configuration graphical interface 400. In addition, the administrator can set various performance-related parameters, such as parameters regarding the number of processing objects that can be activated for a predetermined period of time, in the data processing system using the configuration graphical interface 400. Moreover, the administrator can edit SQL statements to be processed using the configuration graphical interface 400.

Setting XML files exist outside the data processing system and thus need appropriate security policies. An XML encryption/decryption processing unit 453 included in the configuration graphical interface 400 encrypts setting information made using the configuration graphical interface 400 before storing the setting information as an XML file. If the setting information is stored as an XML file without being processed by the XML encryption/decryption processing unit 453, an unauthorized party may easily discover and even modulate data stored in a database 300. Therefore, all the setting information is encrypted/decrypted in order to prevent an error when handling the database 300. An XML file is output as a file of an unknown type without the aid of the XML encryption/decryption processing unit 453. In addition, even when an XML file changes, the changed XML file may not be able to be stored in such a manner that it can be recognized by the data processing code 200 without using the XML encryption/decryption processing unit 453. Therefore, it is possible to prevent unauthorized access to the database 300.

The XML encryption/decryption processing unit 453 may be implemented using Java Cryptography Extension (JCE) 1.2 or using a symmetric key encryption/decryption algorithm based on data encryption standard (DES) Algorithm as follows:

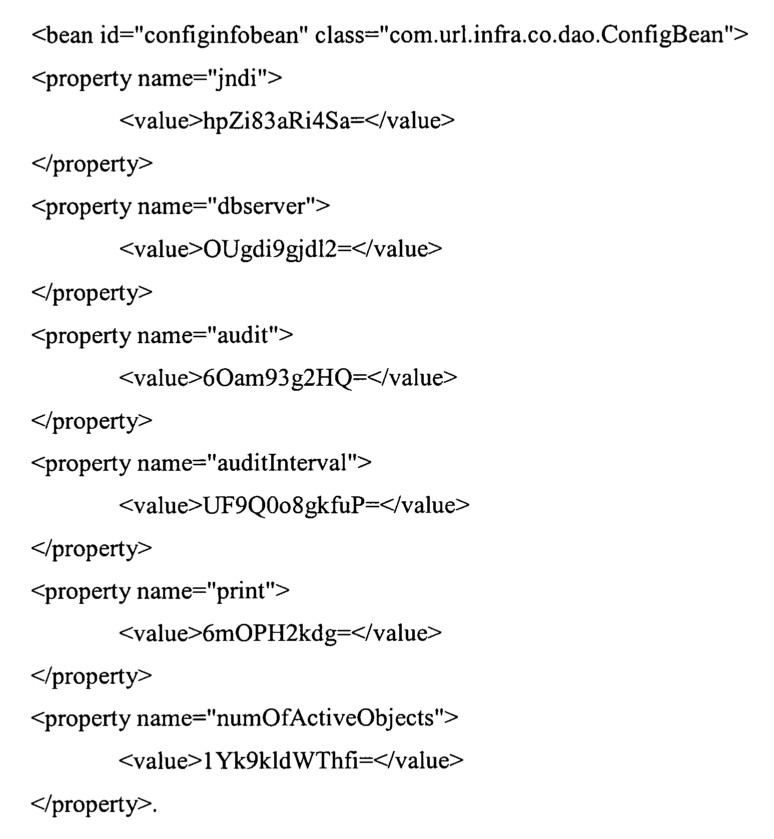

Default values for the data processing system are all encrypted. Therefore, the default values cannot be properly read using a typical text editor other than the XML encryption/decryption processing unit 453.

An XML file 251 is created by converting the default values and SQL statements into parameters. In detail, the SQL statements may be converted into parameters by attaching identifiers to the respective SQL statements and writing the identifiers together with the SQL statements. An example of an XML statement which consists of non-encrypted plain texts is as follows:

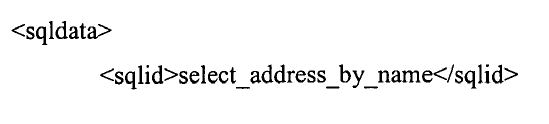

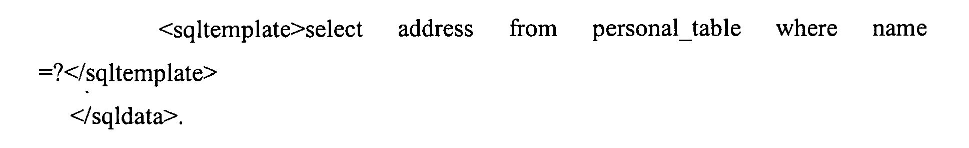

Accordingly, the application 100 may be able to call an SQL statement using an identifier 'select_address_by_name' in order to read a predetermined person's address from a table personal_table. In order to return the predetermined person's name, an SQL statement must be written according to the format of prepared statements of a JDBC so that an application can return the name in run time.

Then, even if a column name of the database 300 for the names of people is changed from 'name' to 'name_val', it is possible to maintain the independence of the application 100 from the database 300 by simply changing the XML file 251. Thus, there is no need to replace the application code 100 with another one.

The data processing code 200 includes an XML processing unit 252, an XML encryption/decryption processing unit 253, an SQL information unit 260, an object pool 230, a scheduler 240, and a connection management unit 210. The XML processing unit 252 loads all XML file setting information into a server. When the data processing code 200 is based on a Java system, the XML file setting information is converted into JavaBeans using a BeanFactory provided by the Spring Framework so that it can be used as a class. Therefore, the server receiving the XML file setting information can use the XML file setting information as an object.

The XML encryption/decryption processing unit 253, like the XML encryption/decryption processing unit 453 in the configuration graphical interface 400, encrypts or decrypts XML file setting information. An XML file is generally encrypted. Therefore, the XML encryption/decryption 253 decrypts an XML file, thereby obtaining SQL statements that can be executed.

The SQL information unit 260 comprises a plurality of SQL statements and can cache the SQL statements to servers. Since the SQL statements can be commonly used by all servers, the SQL information unit 260 may cache the SQL statements to the servers as global information.

The object pool 230 includes one or more processing objects 231, each of which performing a data operation upon the request of the application 100.

Each of the processing objects 231 is connected to the database 300 by an SQL processing unit 220, performs an operation, and provides the operation results.

When an external system issues a request for a processing object to the data processing system, the scheduler 240 intelligently allots one of the processing objects to the external system through scheduling.

The relationship between the scheduler 240 and the processing objects 231 in the object pool 230 will be described later in further detail.

The connection management unit 210, like a JDBC, provides the data processing code 200 with a connection to the database 300. In other words, the connection management unit 210 provides an application programming interface (API) for enabling the data processing code 200 to operate in conjunction with the database 300.

The SQL processing unit 220 comprises an interface for processing queries and choosing an implementation method.

The operation of the data processing code 200 will now be described in detail.

Information regarding the type of the database 300, the type of connection to the database 300 (e.g., a direct connection) or a Java Naming and Directory Interface (JNDI) may be set in the data processing code 200 through the configuration graphical interface 400. In addition, parameters used for operating the data processing code 200 in conjunction with the database 300, such as a drive name, a uniform resource locator (URL), an identifier, and a password, may be set in the data processing code 200 through the configuration graphical interface 400. Also, monitoring-related information, such as information indicating whether to output statistical data, information regarding the interval of outputting the statistical data, and information indicating whether to output console messages, may be set in the data processing code 200 through the configuration graphical interface 400. Moreover, the number of processing objects to be generated in the object pool 230 may be set in the data processing code 200 using the configuration graphical interface 400 and query statements (i.e., SQL statements) that can be used by the application 100 may be stored as XML parameters. All these settings are encrypted by the XML encryption/decryption processing unit 453, and the encrypted results are stored in the XML file 251.

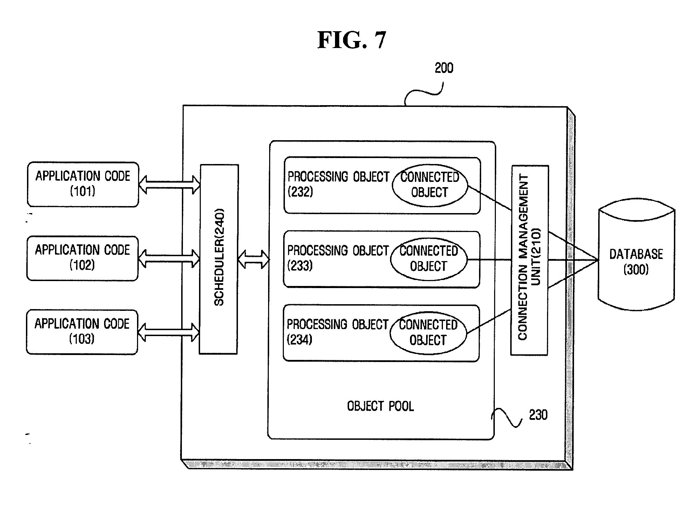

The data processing code 200 generates a processing object 231 and processes a request for performing a database operation issued by an external application. Here, the data processing code 200 may generate only one processing object 230 such that the processing object 230 can be shared by a plurality of external applications. The processing object 230 generated by the data processing code 200 will be described later in further detail with reference to FIG. 7. The XML processing unit 252 opens and reads the XML file 251 so that the XML file 251 can be read by the processing object 231. While the XML file 251 is read by the XML processing unit 252, SQL statements and all XML setting information can be converted into JavaBeans using a BeanFactory provided by the Spring Framework, which is a type of open source framework. It is possible to enhance the reusability of SQL statements and XML setting information more considerably when loading the SQL statements and the XML setting information as JavaBeans than when loading the SQL statements and the XML setting information as parameters.

The XML encryption/decryption processing unit 253 decrypts encrypted data included in the XML file 251, thereby retrieving the original XML setting information. The SQL information unit 260 extracts SQL-related information from the XML file 251 and loads the extracted SQL-related information into a server. At this time, a Java Collection object 'Map' can be established.

The data processing code 200 can search for a desired SQL statement using a query identifier.

The application 100 issues a request for a processing object to the data processing code 200 for processing data. The scheduler 240 transmits information of processing objects that are currently available for the application 100 to the application 100. The application 100 issues a request for processing data in order to complete a predetermined operation. At this time, the application 100 does not input an SQL statement to the data processing code 200 but transmits a query identifier to the processing object 231. For example, in order to search an address table for the address of a predetermined person, the application 100 may transmit an identifier 'select_address_by_name' and the name of the predetermined person to the processing object 231. The data processing code 200 manages information regarding the correspondence between query identifiers and SQL statements. Therefore, the data processing code 200 can find and then execute an SQL statement corresponding to the query identifier transmitted by the application 100. Therefore, even if an SQL statement is changed, the application 100 may use the data processing code 200 without the need to replace the data processing code 200 with another data processing code as long as a query identifier corresponding to the SQL statement is not changed. Therefore, the application 100 is independent from the conversion of SQL statements.

Additionally, when the application 100 requests a predetermined query, the data processing code 200 can generate statistical data regarding the predetermined query. The query requested by the application 100 is processed by the SQL processing unit 220 via the connection management unit 210 which connects the processing object 231 to the SQL processing unit 220.

The connection management unit 210 handles (interfaces) the database 300 using an interface such as a JDBC interface, and transmits the handling (interface) results to the processing object 231. Then, the application 100 receives the handling (interface) results from the processing object 231.

The processing object 231 transmits a query to the database 300 and receives the query results from the database 300. Therefore, the processing object 231 must be connected to the database 300. However, it takes more time to connect the processing object 231 to the database than to transmit a query to the database 300 and receive the query results from the database 300. Therefore, the processing object 231 needs to be designed to be easily connected to the database 300. Hence, an object pooling method, which offers a larger unit of pooling than a connection pooling method, may be used so that a connection between a processing object and the database 300 can be established and then the processing object can be allotted to an application.

In the meantime, it takes a considerable amount of time to perform context switching as well as to establish a connection between the processing object 231 and the database 300. Therefore, in order to reduce context switching time, a work thread may be allocated again to a previous requester. Accordingly, the scheduler 240 maintains information regarding the previous requester so that an object that has been most recently used by the previous requester can be allocated again to the previous requester. The SQL processing unit 220 illustrated in FIG. 6 is located outside the data processing code 200. However, the SQL processing unit 220 may obviously be located inside the data processing code 200.

FIG. 7 is a block diagram for explaining the operation of a scheduler 240 according to an exemplary embodiment of the present invention, i.e., the selection of a processing object and the processing of a request for performing a database operation issued by an application.

In order to perform a predetermined database operation, an application 101 issues a request for allocation of a processing object to a scheduler 240. The scheduler 240 allocates a processing object that performed a database operation in response to a request that has been most recently issued by the application 101 to the application 101, thereby preventing context switching. For this, only one processing object may be generated so that it can serve N applications by performing a database operation requested by each of the N applications on the database. When more than the capacity of the processing object is requested, another processing object is generated so that it can process requests issued by applications other than the N applications.

For example, assuming that an application 103 issues a request for performing a database operation to a processing object 232 while the processing object 232 processes requests issued by 2 applications 101 and 102, the scheduler 240 may allocate new, another processing object 233 to the application 103 so that the request issued by the application 103 can be processed by the new processing object 233.

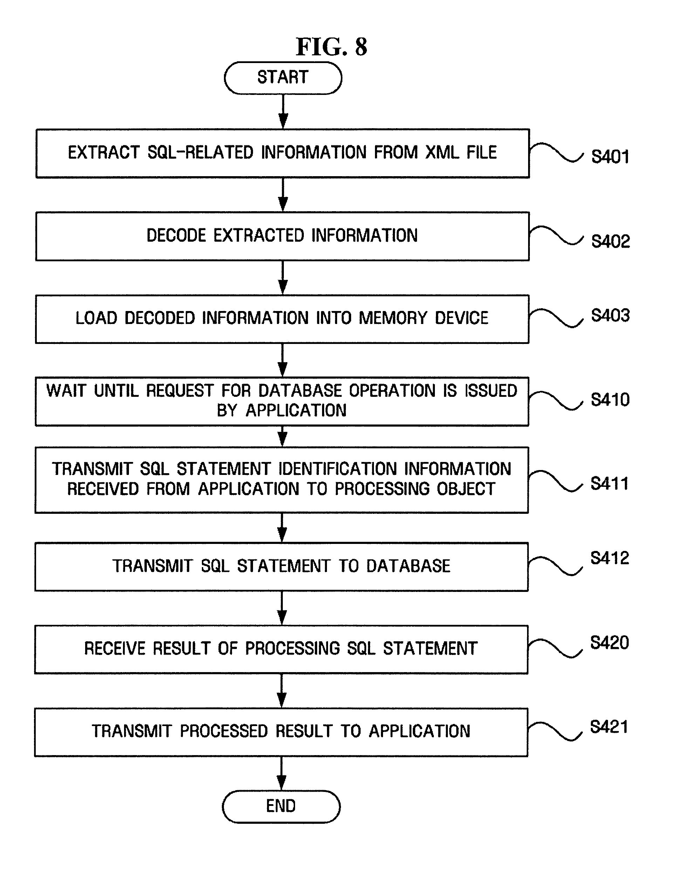

FIG. 8 is a flowchart for explaining a method of issuing a request for a database operation using an SQL statement and identification information of the SQL statement included in an XML file according to an exemplary embodiment of the present invention.

In operation S401, data processing code analyzes elements of an XML file and extracts SQL statements and identification information of the SQL statements. In operation S402, if the elements of the XML file are encrypted or if the XML file itself is encrypted, the data processing code may decrypt the elements of the XML file or the XML file. In operation S403, the SQL statements and the identification information of the SQL statements are loaded into a memory device. In operation S403, if the data processing code is based on a Java system, the SQL statements and the identification information of the SQL statements may be converted into JavaBeans, and the JavaBeans may be loaded into the memory device. Thereafter, a processing object is generated so that it can process a request issued by an application.

In operation S410, the data processing code may be put in standby mode until a request (hereinafter referred to as a current request) for performing a database operation is issued by the application. In operation S411, when SQL statement identification information is received from the application, it is transmitted to a processing object. More particularly, as described above, a scheduler maintains information regarding the application and thus searches for a processing object that previously processed a request most recently issued by the application. Thereafter, the scheduler transmits the received SQL statement identification information to the discovered processing object, thereby reducing the time required for context switching. In operation S403, the discovered processing object searches for an SQL statement corresponding to the received SQL statement identification information with reference to the SQL statements and the identification information of the SQL statements loaded into the memory device in operation S403. In operation S412, the discovered processing object transmits the discovered SQL statement to the database and issues a request for executing the discovered SQL statement to the database. In operation S420, the discovered processing object receives the execution result from the database. The execution result may comprise a plurality of records of a table or information specifying whether the execution of the discovered SQL statement has been successful or not. In operation S421, the discovered processing object transmits the execution result to the application. If the application requests a database operation later again, the scheduler may immediately transmit SQL statement identification information received from the application to the discovered processing object.

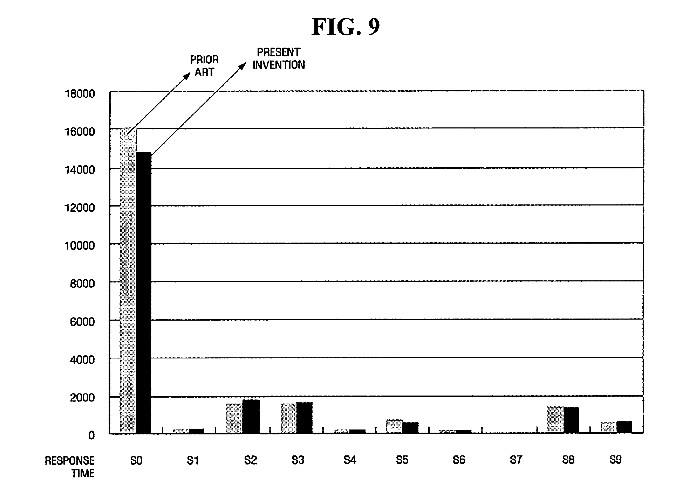

FIG. 9 is a diagram for comparing the performance of an embodiment of the present invention with the performance of the prior art. The performance of the present invention was tested using ANSI SQL Standard Scalable and Portable Benchmark (AS3AP), which is a type of database benchmark program. If software modules are implemented using the present invention, the independence of the software modules may improve, but the performance of a system including the software modules may deteriorate. In order to prevent the performance of the system from considerably deteriorating, an object pooling method (instead of a connection pooling method) and a processing object scheduling method capable of reducing context switching may be used, and ArrayList and Object of a Java system may be chosen as a row and a column, respectively, of SQLResultSet.

Referring to FIG. 9, in the case S0, an embodiment of the present invention offers a shorter response time and thus has better performance than the prior art. In the cases S through S9, the embodiment of the present invention offers almost the same short response time as the prior art. Therefore, the embodiment of the present invention generally has better performance than the prior art throughout S0 through S9.

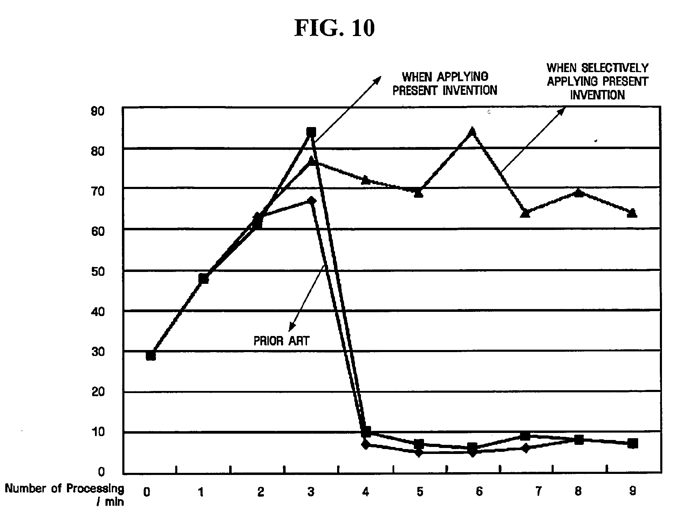

FIG. 10 is a diagram for comparing the performance of an embodiment of the present invention with the performance of the prior art. Even if the number of threads increases, it is possible to prevent the number of operations handled per second from considerably decreasing by selectively applying the present application.

As described above, according to preferred embodiments of the present invention, it is possible to prevent changes in one software module from affecting other software modules. The system can ensure the independence of software modules and the flexibility of developing a database application, reduce the development and maintenance cost of software programs, and guarantee the independence of software programs.

It will be apparent to those skilled in the art that various modifications and changes may be made thereto without departing from the scope and spirit of the invention. Therefore, it should be understood that the above exemplary embodiments are not restrictive but illustrative of various aspects of the present invention. The scope of the present invention is defined by the appended claims rather than the detailed description of the invention. All modifications and changes derived from the scope and spirit of the claims and equivalents thereof should be construed to be included in the scope of the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system comprising:
an Extensible Markup Language (XML) processing unit (252) which analyzes elements of an XML file and extracts SQL statements and identification information of the SQL statements;
a Structured Query Language (SQL) information unit (260) which loads the SQL statements and the identification information of the SQL statements in a memory device;
an object pool (230) which comprises one or more processing objects that receive SQL statement identification information from an application (100), searches for an SQL statement corresponding to the received SQL statement identification information, transmits the discovered SQL statement, receives a result of executing the discovered SQL statement from a database, and transmits the execution result to the application; and
a scheduler (240) which receives a first SQL statement identification information from the application, chooses from the object pool a processing object (231) that previously received a second SQL statement identification information from the application, and transmits the first SQL statement identification information to the chosen processing object.

2. The system of claim 1, wherein the XML file comprises database information necessary for executing the SQL statements extracted from the XML file.

3. The system of claim 1 or claim 2, wherein the XML file or the elements of the XML file are encrypted, and the XML processing unit comprises an XML encryption/decryption processing unit which decrypts the XML file or the elements of the XML file.

4. The system of any preceding claim, wherein the processing object (231) further receives parameters needed for executing the SQL statement corresponding to the received SQL statement identification information.

5. A method of implementing a database application while guaranteeing the independence of software modules, comprising:
analyzing elements of an XML file and extracting SQL statements and identification information of the SQL statements;
loading the SQL statements and the identification information of the SQL statements in a memory device;
receiving a first SQL statement identification information from an application (100), choosing a processing object (231) that previously received a second SQL statement identification information from the application, and transmitting the first SQL statement identification information to the chosen processing object; and
enabling the chosen processing object to search for and discover an SQL statement corresponding to the first SQL statement identification information, to transmit the discovered SQL statement to a database, to receive a result of executing the discovered SQL statement from the database, and to transmit the execution result to the application.

6. The method of claim 5, wherein the XML file comprises database information necessary for executing the SQL statements extracted from the XML file.

7. The method of claim 5 or claim 6, wherein the extracting comprises, if the XML file or the elements of the XML file are encrypted, decrypting the XML file or the elements of the XML file.

8. The method of any one of claims 5-7, wherein the transmitting of the first SQL statement identification information comprises transmitting parameters needed for executing the SQL statement corresponding to the first SQL statement identification information.
